Europäisches Patentamt

**European Patent Office**

Office européen des brevets

(19)

(11) Numéro de publication: **0 031 754**
**B1**

(12) **FASCICULE DE BREVET EUROPEEN**

(45) Date de publication du fascicule du brevet:
**14.03.84**

(51) Int. Cl.³: **G 11 B 15/28,** G 11 B 15/43,
G 11 B 15/46, G 11 B 15/54

(21) Numéro de dépôt: **80401789.5**

(22) Date de dépôt: **12.12.80**

(54) Dérouleur de bande comportant deux cabestans et des moyens de commande pour contrôler la tension de la bande.

(30) Priorité: **26.12.79 FR 7931649**

(43) Date de publication de la demande:
**08.07.81 Bulletin 81/27**

(45) Mention de la délivrance du brevet:
**14.03.84 Bulletin 84/11**

(84) Etats contractants désignés:
**AT BE CH DE GB IT LI NL SE**

(56) Documents cités:
**DE - A - 1 549 132**
**FR - A - 2 194 016**
**FR - A - 2 217 763**
**FR - A - 2 333 316**
**FR - A - 2 355 752**
**US - A - 3 311 280**
**US - A - 3 329 876**
**US - A - 3 707 707**
**US - A - 4 095 146**

**IBM TECHNICAL DISCLOSURE BULLETIN, vol. 11, no. 8,
janvier 1969, New York US, F.A. REIGEL: "Tape wear
reduction system", pages 1048-1049**

(73) Titulaire: **ENERTEC SOCIETE ANONYME, 12, Place des
Etats-Unis, F-92120 Montrouge (FR)**

(72) Inventeur: **Lelandais, Guy, 7, bld des Oiseaux,
F-91440 Bures Sur Yvette (FR)**

(74) Mandataire: **Bentz, Jean-Paul, GIERS SCHLUMBERGER
Service BREVETS 12, place des Etats-Unis,
F-92124 Montrouge Cedex (FR)**

BUNDESDRUCKEREI BERLIN

## Dérouleur de bande comportant deux cabestans et des moyens de commande pour contrôler la tension de la bande

La présente invention concerne un dérouleur de bande destiné à être utilisé avec des transducteurs pour faire défiler cette bande le long d'un trajet prédéterminé passant au niveau desdits transducteurs et tel que décrit dans le préambule de la revendications n° 1.

Les dérouleurs de bandes sont empoyés avec des transducteurs électromagnétiques pour faire défiler une bande d'enregistrement magnétique, le long d'un trajet prédéterminé passant le long desdits transducteurs durant les phases d'enregistrement et de reproduction des signaux sur la bande.

Afin de garantir une grande fidélité dans la reproduction du signal, plusieurs techniques sont couramment employées. Ainsi, le mouvement de la bande au niveau des transducteurs est en général produit, directement ou indirectement, par un ou deux galets dénommés cabestans, entraînés par un moteur électrique.

On connaît des systèmes dans lesquels deux cabestans sont entraînés par des moteurs respectifs pour contrôler la tension de bande, ces moteurs étant tous les deux pilotés par des signaux respectifs directement issus d'une source indépendante. Par exemple, dans le brevet français FR 2 217 763, les moteurs de cabestans sont pilotés par des signaux provenant d'un oscillateur unique associé à deux diviseurs; dans le brevet français FR 2 194 016, deux générateurs de signaux de référence fournissent des signaux de référence séparés à un amplificateur différentiel multiplexé en vue d'une comparaison avec des signaux de vitesse respectifs provenant de tachymètres distincts; dans le brevet français FR 2 333 316, les bobines de bande magnétique sont entraînées par des galets tangents animés par des moteurs respectifs asservis de façon analogique; le moteur d'enroulement est fermement calé en rotation, sur une tension de référence, tandis que le moteur dévideur reçoit un courant de retenue sensiblement constant. Bien que l'asservissement du moteur tienne compte de la dérive des tachymètres à courant continu du moteur d'enroulement et du moteur dévideur, des dérives sensibles de la vitesse de bande demeurent; enfin le brevet américain US 3 707 707 décrit un dispositif dans lequel deux moteurs de cabestans sont alimentés par deux sources distinctes de signaux de référence, les fréquences de ces signaux différant l'une de l'autre d'une quantité prédéterminée.

Aucun de ces systèmes connus ne permet un contrôle rigoureux de la vitesse de la bande et de la distortion du signal produit tel que pleurage et scintillement, dans des conditions d'environnement sévère, en particulier dans des conditions d'accélérations ou de variation de température importantes.

En effet, dans les conditions d'environnement sévère, les phénomènes indésirables rencontrés pour les éléments mécanique et électroniques se combient intimement en dégradant globalement les caractéristiques du dérouleur concerné; en particulier les dérives en température des composants électroniques se combient aux phénomènes de dilatation et les temps de réponse des circuits se combient aux inerties des pièces en mouvement.

C'est ainsi que les dispositifs connus utilisant des asservissement à courant continu ou à deux sources indépendantes ne peuvent convenir pour les applications particulières d'environnement sévère.

On connaît, par le brevet US 3 329 876, un système dans lequel l'asservissement diffère selon que le système est dans la phase d'enregistrement et dans la phase de reproduction, et utilise pour l'asservissement à la reproduction, un signal enregistré sur deux pistes de la bande magnétique. Ce dispositif obtient ainsi l'asservissement en vitesse de la bande mais ce résultat est obtenu au prix de contraintes importantes tant en ce qui concerne les moyens mis en oeuvre que leur mode d'utilisation.

Dans ce contexte, le but de la présente invention est de proposer un dérouleur de bande doté d'un asservissement de la cinématique de bande, qui sans contrainte particulière dans son utilisation, fonctionne de façon très satisfaisante dans des conditions d'environnement sévère.

A cette fin, le dérouleur de bande de l'invention est caractérisé conformément à la revendication n° 1.

Une telle disposition permet de maintenir la bande sous une tension élevée requise le long dudit trajet prédéterminé indépendamment de la tension à l'extérieur de celui-ci.

De préférence, chacun des galets est monté pour pouvoir être déplacé selon une course en arc autour de son cabestan respectif, et se trouve sollicité dans une direction qui tend à accroître l'enroulement de ladite bande autour du cabestan.

Une telle disposition est connue en tant que telle par le brevet allemand DE 1 549 132.

Cependant, conformément à un aspect de l'invention les galets eux-mêmes peuvent être utilisés pour commander les tensions de débit et de reprise de la bande (par exemple en commandant le mouvement des bobines de bandes en liaison avec la position du galet respectif le long de sa course en arc), indépendamment de la tension le long dudit trajet prédéterminé au niveau du capteur.

Il en résulte un isolation plus grande de la tension de la bande au niveau des transducteurs par rapport à la tension appliqué à cette bande en dehors de la zone d'enregistrement et de lecture.

Un dérouleur de bandes conforme à cette invention va être maintenant décrit à titre d'exemple en référence aux dessins annexés dans lesquels:

la figure 1 est une vue en plan schématique d'un enregistreur à bande magnétique incorporant le dérouleur;

La figure 2 est une vue en coupe selon la ligne II-II de la figure 1;

la figure 3 est une vue en plan fragmentaire de l'enregistreur illustrant la méthode de mise en place de la bande; et,

la figure 4 est un schéma synoptique d'une partie d'un circuit de servo-commande du dérouleur de bandes.

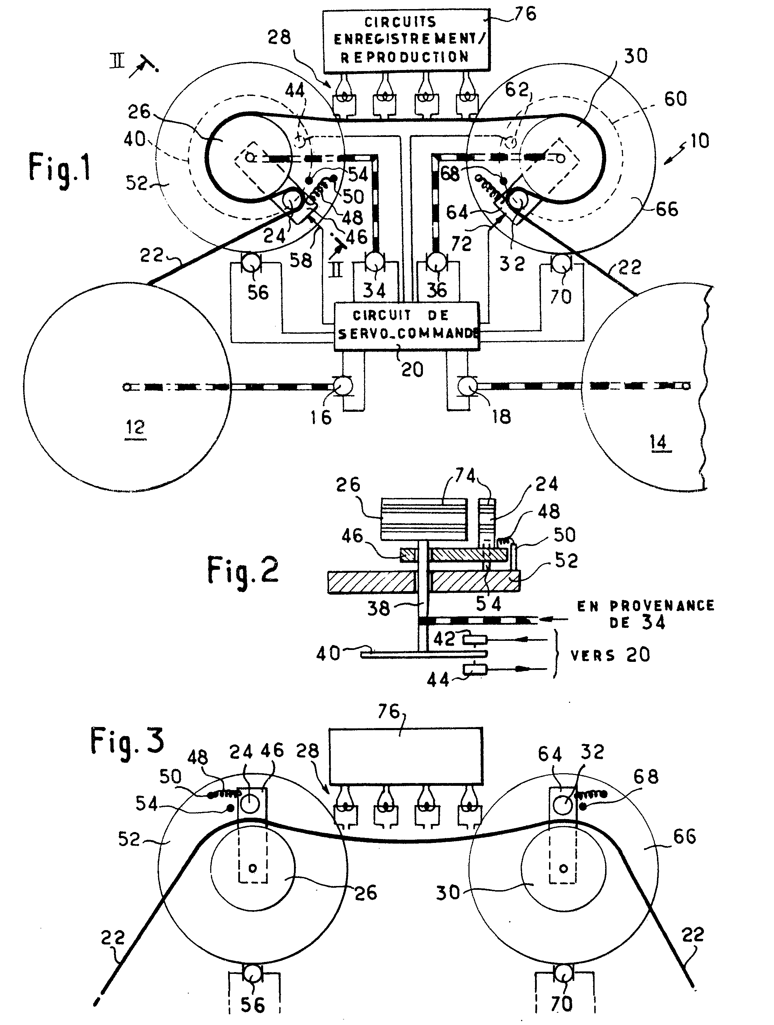

Si l'on se réfère aux figures 1 et 2, un enregistreur à bande désigné d'une façon générale par la référence 10, comporte deux bobines magasins de bandes 12 et 14 qui peuvent être utilisées de façon interchangeable pour débiter et recevoir la bande selon la direction du défilement de la bande. Chaque bobine 12 et 14 est entraînée par un moteur électrique 16 et 18 sous la commande d'un circuit de télécommande 20.

Comme le montre la figure 1, la bande 22 passe de la bobine 12 à un premier galet de tension 24 autour duquel elle s'enroule sur environ un demi-tour. La bande 22 est ensuite enroulée autour d'un peu plus de la moitié de la circonférence d'un premier cabestan 26 à partir duquel elle passe au niveau de quatre transducteurs électromagnétiques 28 couramment dénommés têtes magnétiques en direction d'un deuxième cabestan 30. Ce cabestan 30 et un galet de tension associé 32 sont symétriquement disposés par rapport au cabestan 26 et galet 24, et la bande 22 s'enroule de la même manière autour d'eux avant d'atteindre la bobine 14.

Chaque cabestan 26, 30 est agencé pour être entraîné individuellement par un moteur électrique à circuit imprimé, respectivement 34, 36, commandé par le circuit de servo-commande 20. A cet effet, et comme le montre particulièrement bien la figure 2, le cabestan 26 est monté à l'extrémité d'un arbre 38 couplé au moteur 34. La partie inférieure de l'arbre 38 supporte un disque tachymétrique transparent 40, comportant plusieurs milliers de marques linéaires opaques équidistantes de direction radiale, interposés entre une source lumineuse 42 et un détecteur optique 44. Lorsque le disque 40 tourne avec le cabestan 26, les lignes coupent de façon régulière le trajet lumineux vers le détecteur 44, dont la sortie consiste en conséquence en un signal plusé dont la fréquence fournit une indication de la vitesse de rotation du cabestan 26. Le signal tachymétrique est envoyé au circuit de servo-commande 20 comme signal de réaction pour effectuer la servo-commande de façon connue de l'alimentation du moteur 34 et par conséquent de la vitesse du cabestan 26.

Le galet de tension 24 monté en rotation sur un bras 46 librement pivotant sur l'arbre 38 et qui est sollicité dans le sens contraire des aiguilles d'une montre (comme le montre la figure 1) par un ressort de tension 48, fixé au bras 46 et à un tenon 50 monté sur une roue 52. La roue 52, qui supporte un deuxième tenon 54 à proximité du tenon 50 est également montée à pivotement libre autour de l'arbre 38 et est susceptible d'être déplacée angulairement autour de cet arbre 38 par un moteur électrique 56. Un détecteur de position, indiqué de façon schématique en 58 sur la figure 1, fournit un autre signal de réaction représentatif de la position du bras 46 au circuit de servo-commande 20 pour la servo-commande de façon connue du moteur 16 d'entraînement de la bobine 12.

Le cabestan 30 et le galet 32 sont disposés de la même manière que le cabestan 26 et le galet 24, et associés à des éléments comprenant un disque tachymétrique 60, un détecteur optique 62, un bras 64, une roue 66, un tenon 68, un moteur 70 et un détecteur 72 (correspondants aux éléments protant les références 40, 44, 46, 52, 54, 56, 58 respectivement). Les cabestans 26 et 30 et les galets de tension 24, 32 présentent de manière conventionnelle des rainures périphériques 74, comme le représente la figure 1, pour éviter d'entraîner de l'air entre leur surface respective et la bande aux vitesses élevées de cette dernière. Les transducteurs 28 sont couplés aux circuits de conditionnement habituels pour l'enregistrement et la reproduction du signal; ces circuits ne font pas partie de l'invention et sont, par conséquent, indiqués de manière générale en 76.

En fonctionnement, et en supposant que la bande se déplace de la bobine 12 vers la bobine 14, cette bande 22 est entraînée au niveau des transducteurs 28 par les cabestans 26 et 30 par l'effet du contact sans glissement entre ces cabestans et la bande. Chaque cabestan 26 et 30 est entraîné séparément par un son moteur respectif 34, 36 et conformément aux signaux de commande qui lui sont envoyés par le circuit de servo-commande 20, et qui sont élaborés en partie à partir des signaux de réaction tachymétriques provenant des détecteurs 44 et 62. En outre, le circuit de servo-commande 20 est agencé pour alimenter les moteurs 34 et 36, de façon telle que le cabestan »récepteur« (dans le cas considéré, le cabestan 30) soit entraîné par un couple quelque peu plus élevé que ne l'est le cabestan »débiteur« (dans ce cas, le cabestan 26). En conséquence, le cabestan 26 tend à tourner moins vite que le cabestan 30 et la portion de bande qui passe le long du trajet entre les cabestans 26 et 30 devant les transducteurs 28 est soumise à une tension considérable, de façon à rendre cette bande bien plate, et à provoquer un contract étroit et uniforme entre la bande 22 et les transducteurs 28. Si la direction du déplacement de la bande est inversée, le circuit 20 est agencé pour provoquer l'entraînement du cabestan 26 (lequel est maintenant le cabestan récepteur) sous un couple plus élevé que ne l'est le cabestan 30 (cabestan débiteur).

Les bobines 12 et 14 sont entraînées par leurs moteurs respectifs 16, 18 en réponse aux signaux de commande en provenance du circuit 20, pour maintenir les bras 46 et 64 des galets de tension dans des positions prédéterminées. Ces positions, qui sont repérées par les capteurs 58 et 72, sont choisies de façon à maintenir la bande 22 à la tension désirée entre la bobine 12 et le cabestan 26, et entre la bobine 14 et le carbestan 30. Le contact par friction entre la bande 22 et les cabestans 26 et 30 permet d'éviter de manière effective que la tension de bande élevée qui règne entre les cabestans 26 et 30 ne se propage le long de la bande au-delà de ces cabestans 26 et 30. Ainsi, la tension de la bande par delà les cabestans 26 et 30 peut être commandée de façon séparée et indépendante de la tension de cette bande le long des transducteurs 28, et peut être ajustée à une valeur différente de la tension sur le trajet le long desdits transducteurs. En particulier, cette tension peut être réglée à une valeur sensiblement plus basse, appropriée à l'alimentation de bande, à partir de l'une des bobines 12 et 14 et plus particulièrement à la reprise de cette bande de manière uniforme par l'autre desdites bobines.

Ainsi, la disposition représentée sur la figure 1 permet de concilier des exigences contradictoires convernant la tension de la bande en différents points de sa trajectoire.

Lorsqu'on désire mettre en place la bande 22 dans le dérouleur 10, le circuit de servo-commande peut être commandé par un dispositif non représenté pour mettre en action les moteurs 56 et 70. Ceci provoque le déplacement des roues 52 et 66 depuis les positions représentées sur la figure 1 jusqu'aux positions montrées sur la figure 3. En particulier, les tenons 54 et 68 attaquent les bras 46 et 64 respectivement pendant cette opération pour les pousser autour des cabestans 26 et 30 en direction des transducteurs 28, comme le représente la figure 3. En outre, les transducteurs 28 peuvent être agencés si on le désire, pour venir se placer en retrait (par exemple par des cames ou leviers entraînés par un moteur) par rapport à leur position normale d'enregistrement ou de reproduction de la bande. La mise en place de la bande maintenant ne demande plus que l'insertion de la bande 22 entre le cabestan 26 et le galet de tension 24 et, entre le cabestan 30 et le galet de tension 32, et son passage au voisinage des transducteurs 28 le long de la trajectoire représentée sur la figure 3. On peut voir que cette opération est très simple et ne met pas en jeu des manipulations délicates de la bande 22, par exemple la formation de boucles destinées à êtres mises en place autour de galets. Par la suite, le circuit de servo-commande 20 est mis en action pour commander à nouveau les moteurs 56 et 70 dans le sens opposé, ce qui ramène les roues 52 et 66 dans les positions représentées à la figure 1, et ainsi provoque la mise en place de la bande 22 le long de sa trajectoire tortueuse autour des cabestans 26, 30 et des galets 24, 32. En même temps, les transducteur 28 sont ramenés, si besoin est, dans leur position de fonctionnement normale pour venir en contact avec la bande 22. On comprendra que la séquence des opérations qui vient d'être décrite peut nécessiter l'utilisation par exemple de commutateurs de fin de cours pour commander une mise en action des moteurs 56 et 70, en fonction de la position des roues 52 et 66; la mise en oeuvre de tels détails est évidente pour l'homme de l'art et a été omise des dessins par souci de clarté.

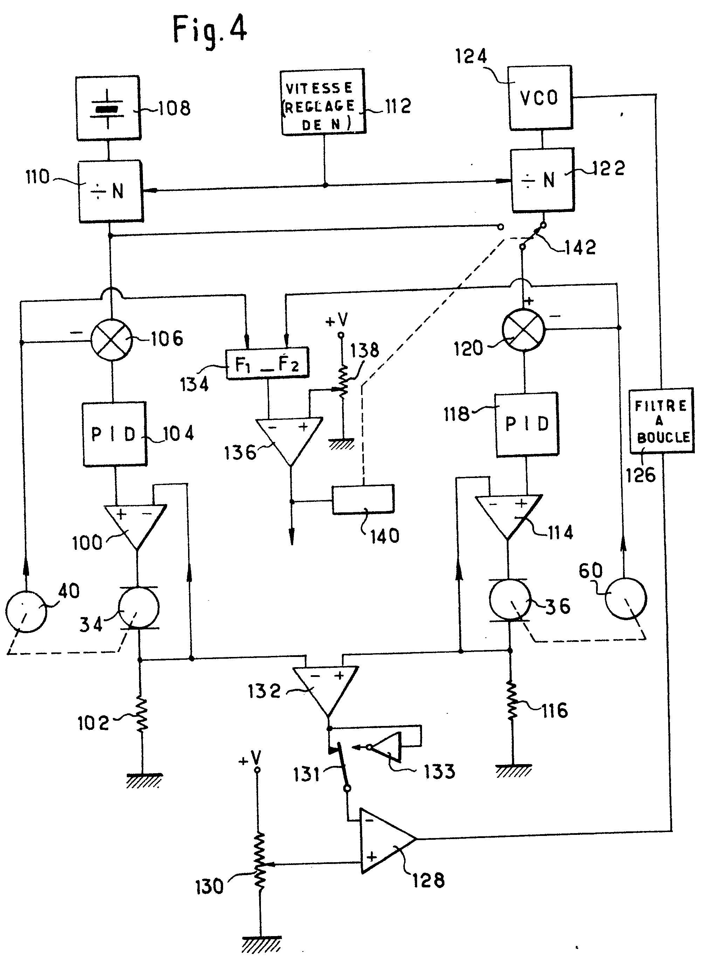

La figure 4 représente le schéma d'un agencement se la portion du circuit de servo-commande 20 qui commande les moteurs des cabestans 34 et 36.

En se reportant à la figure 4, le moteur 34 reçoit un courant d'alimentation en provenance d'un amplificateur de servo-commande 100, dont l'une des entrées reçoit une tension de réaction développée par ce courant d'alimentation, aux bornes d'une résistance de faible valeur 102 branchée dans le trajet du courant vers la masse du moteur 34. L'autre entrée de l'amplificateur 100 reçoit par l'intermédiaire d'un intégrateur/ différentiateur proportionnel 104, la sortie du détecteur de phase 106. Ce détecteur de phase 106 est alimenté par le signal de sortie dérivé du disque tachymétrique 40, associé au moteur 34 et avec un signal pulsé qui lui est transmis à partier d'un oscillateur à cristal 108 par l'intermédiaire d'un diviseur variable 110. La boucle 40-106-104-100-34 fonctionne d'une manière connue en soi pour entraîner le moteur 34; à une vitesse qui, mesurée à l'aide du disque tachymétrique 40, est fonction de la fréquence du signal plusé, fourni par le diviseur 110. La fréquence de ce signal dépend de la fréquence de l'oscillateur 108 (par exemple, 1,6 MHz) et le rapport de division N du diviseur 110. Une commande de vitesse 112 est connectée au diviseur 110 afin de permettre de choisir différentes valeurs de N, et par conséquent, différentes vitesses du moteur 34.

Le moteur 36 est alimenté en courant de la même façon par un amplificateur de servo-commande 114 associé à une résistance de faible valeur 116, un intégrateur différentiateur proportionnel 118 et un détecteur de phase 120. Ce détecteur de phase 120 reçoit le signal de vitesse du moteur dérivé du disque tachymétrique 60, et en fonctionnement normal, un signal pulsé en provenance d'un diviseur variable 122, semblable au diviseur 110, et le rapport de division N pouvant de la même façon être sélectionné par la commande de vitesse 112. Cependant, contrairement au diviseur 110, le diviseur 122 est alimenté par un signal pulsé en provenance d'un oscillateur commandé en tension (VCO) 124 qui fonctionne en réponse à une tension de commande qui lui est transmise par l'intermédiaire d'un filtre à boucle de commande 126 par un comparateur 128. Une entrée de ce comparateur 128 est branchée pour recevoir une tension de référence à partir d'une résistance variable 130, tandis que l'autre entrée reçoit, par l'intermédiaire d'un commutateur 131, un signal de sortie d'un amplificateur différentiel 132, dont les entrées sont branchées pour recevoir les tensions de réaction développées aux bornes des résistances 102 et 116.

Les caractéristiques fonctionnelles inhérentes aux moteurs à circuit imprimé 34 et 36 sont telles que les couples qu'ils développent sont proportionnels aux courants d'alimentation qui les traversent. Ainsi, les tensions de réaction aux bornes des résistances 102 et 116 sont indicatives des couples développés par les moteurs respectifs 34 et 36, et le signal de sortie de l'amplificateur différentiel 132 est indicatif de la différence entre ces couples (c'est à dire, la différence dans les couples appliqués aux cabestans 26 et 30). Le VCO 124 est commandé par le comparateur 128 pour fournir un signal pulsé au détecteur de phase 120 par l'intermédiaire du diviseur 122, de telle sorte que le signal de sortie de l'amplificateur différentiel 132 reste égal à la tension de référence préréglée par ajustage de la résistance réglable 130. Par conséquent, le moteur 36 est en fait alimenté pour développer un couple qui diffère de celui qui est développé par le moteur 34 d'une quantité qui dépend de l'amplitude de la tension de référence prédéterminée (et qui peut être commandée par réglage de cette dernière). Si la direction de défilement de la bande est inversée, le commutateur 131 est modifié en position par rapport à celle représentée pour interposer un inverseur 133 entre l'amplificateur différentiel 132 et le comparateur 128 de façon à inverser ainsi les signaux d'entrée de l'amplificateur 132 nécessaires pour maintenir l'équilibre au niveau du comparateur 128.

En pratique, la fréquence réelle du signal de sortie du VCO 124 ne différera guère de celle de l'oscillateur 108. La différence de couple résulte des différences de phase entre les deux signaux. Toute différence sensible en fréquence est représentative d'un mauvais fonctionnement, tel que la perte de sa position de verrouillage par le VCO 124 qui doit être détectée et corrigée si l'on veut éviter d'endommager la bande 22 et/ou le dérouleur de bande 10. Pour cette raison, les signaux de réaction en provenance des disques tachymétriques 40 et 60 sont également transmis à un comparateur de fréquence 134.

Celui-ci fournit un signal représentatif de la différence de fréquence à une entrée d'un comparateur 136, dont l'autre entrée reçoit une tension de référence en provenance d'une résistance réglable 138. La sortie du comparateur 136 commande la bobine d'un relais 140 associée à un commutateur bi-polaire 142 interposé entre le diviseur variable 122 et les détecteurs de phase 120. Ce commutateur bi-polaire est normalement dans la position représentée sur la figure 4, reliant le détecteur de phase 120 pour recevoir le signal de sortie du diviseur 122. Cependant, au cas où la différence de fréquence entre les signaux de réaction en provenance des diviseurs 110 et 122 dépasse une limite correspondant à la tension de référence établie par réglage de la résistance 138, le comparateur 136 actionne la bobine du relais 140. Le commutateur 142 se trouve alors inversé pour relier le détecteur de phase 120 afin de recevoir le même signal que le détecteur de phase 106, en provenance du diviseur 110. Ceci provoque l'alimentation des deux boucles de contrôle à l'aide du même signal de référence, en permettant ainsi au VCO 124 de rétablir ce verrouillage de fréquence.

## Revendications

1. Dérouleur de bande destiné à être utilisé avec des transducteurs pour faire défiler cette bande le long d'un trajet prédéterminé passant au niveau desdits transducteurs, comprenant:

— deux cabestans (26, 30), disposés chacun à une extrémité respective dudit trajet prédéterminé;
— deux moyens d'entraînement (34, 36), couplés chacun à un desdits cabestans (26, 30) respectivement:
— des moyens de commande (20), couplés auxdits moyens d'entraînement (34, 36) et agencés pour commander le fonctionnement de ces derniers de façon à entraîner lesdits cabestans (26, 30) à des couples différents et à faire apparaître une tension contrôlée dans la bande le long dudit trajet; lesdits moyens de commande (20) comprenant une première boucle de servo-commande, incluant un premier desdits moyens d'entraînement (34) et fonctionnellement couplée à une source indépendante de signaux d'oscillation (108, 110) de manière à contrôler le fonctionnement dudit premier moyen d'entraînement en fonction de la fréquence des signaux de ladite source indépendante, et lesdits moyens de commande (20) comportant une seconde boucle de servo-commande incluant le second desdits moyens d'entraînement (36) et fonctionnellement couplée à une source contrôlée de signaux d'oscillation (122, 124) de manière à commander le fonctionnement dudit second organe d'entraînement (36) en fonction de la fréquence des signaux de cette source contrôlée caractérisé en ce que cette même source contrôlée de signaux d'oscillation (122, 124) est fonctionnellement couplée à ladite première boucle de servo-commande de manière à ce que la fréquence de ses signaux d'oscillation soit fonction du courant d'alimentation dudit premier moyen d'entraînement (34).

2. Dérouleur de bande suivant la revendication 1, caractérisé en ce que ladite source contrôlée de signaux d'oscillation (122, 124) est fonctionnellement couplée à des moyens (128, 130, 132) conçus pour détecter les couples développés par lesdits premier et second moyens d'entraînement (34, 36).

3. Dérouleur de bande suivant la revendication 2, caractérisé en ce que ladite source contrôlée de signaux d'oscillation comprend un oscillateur commandé en tension (124), fonctionnellement couplé à un comparateur (128), qui est lui-même fonctionnellement couplé à une source de signal de référence (130) et à un amplificateur différentiel (132) recevant des signaux représentatifs des couples développés par lesdits moyens d'entraînement (34, 36).

4. Dérouleur de bande suivant l'une quelconque des revendications précédentes, caractérisé par des moyens de comparaison (134, 136), conçus pour détecter la différence entre les vitesse desdits cabestans (26, 30) et pour coupler ladite seconde boucle de servo-commande (36, 60, 114, 118, 120) à ladite source indépendante (108, 110) si ladite différence entre les vitesses excède une valeur prédéterminée.

5. Dérouler de bande suivant l'une quelconque des revendications précédentes comprenant:

— deux galets (24, 32), disposés chacun au voisinage d'un desdits cabestans respectifs (26, 30) et agencés pour assurer l'enroulement partiel de la bande (22) au delà de l'extrémité respective dudit trajet, autour du cabestan respectif (26, 30), caractérisé en ce que chacun desdits galets (24, 32) est monté de façon à se déplacer sur un trajet en arc de cercle autour du cabestan respectif (26, 30), et est sollicité dans une direction qui tend à accroître l'angle d'enroulement de ladite bande (22) autour de se cabestan.

6. Dérouleur de bande suivant la revendication 5, caractérisé en ce que lesdits galets (24, 32) sont utilisés pour contrôler l'approvisionnement en bande et la tension de reprise de cette bande.

7. Dérouleur de bande suivant l'une quelconque des revendications précédentes comprenant:

— deux galets (24, 32), disposé chacun au voisinage d'un desdits cabestans respectifs (26, 30) et agencés pour assurer l'enroulement partiel de la bande (22) au delà de l'extrémité respective dudit trajet, autour du cabestan respectif (26, 30), caractérisé en ce que lesdits galets (24, 32) sont sélectivement déplaçables dans des directions opposées à celles dans lesquelles ils sont normalement sollicités, afin de diminuer ledit angle d'enroulement de la bande (22) et de faciliter le chargement de cette bande dans ledit dérouleur.

**Patentansprüche**

1. Bandabwickler zur Verwendung mit Wandlern, für die Vorbeiführung dieses Bandes entlang einer vorbestimmten Bahn, die auf der Höhe der Wandler vorbeiführt, enthaltend:

— zwei Bandtransportrollen (26, 30) die jeweils an einem entsprechenden Ende der vorbestimmten Bahn angeordnet sind;
— zwei Antriebseinrichtungen (34, 36), von denen jede an eine der Bandtransportrollen (26, 30) angekoppelt ist;
— Steuermittel (20), die an die Antriebseinrichtungen (34, 36) angekoppelt und so ausgelegt sind, daß sie den Betrieb derselben derart steuern, daß die Bandtransportrollen (26, 30) mit unterschiedlichen Drehmomenten angetrieben werden und eine gesteuerte Spannung in dem Band längs der genannten Bahn erscheint; wobei die Steuermittel (20) eine erste Servoregelschleife enthalten, die eine erste der beiden Antriebseinrichtungen (34) enthält und funktionell an eine unabhängige Schwingungssignalquelle (108, 110) angekoppelt ist, so daß die Funktion der ersten Antriebseinrichtung in Abhängigkeit von der Signalfrequenz der unabhängigen Quelle gesteuert wird und die Steuermittel (20) eine zweite Servoregelschleife enthalten, welche die zweite Antriebseinrichtung (36) umfaßt und funktionsmäßig an eine gesteuerte Schwingungssignalquelle (122, 124) angekoppelt ist, so daß die Funktion der zweiten Antriebseinrichtung (36) in Abhängigkeit von der Signalfrequenz dieser gesteuerten Quelle gesteuert wird, dadurch gekennzeichnet, daß dieselbe gesteuerte Schwingungssignalquelle (122, 124) funktionsmäßig an die erste Servoregelschleife derart angekoppelt ist, daß die Frequenz ihrer Schwingungssignale abhängig von dem Speisestrom der ersten Antriebseinrichtung (34) ist.

2. Bandabwickler nach Anspruch 1, dadurch gekennzeichnet, daß die gesteuerte Schwingungssignalquelle (122, 124) funktionell an Mittel (128, 130, 132) angekoppelt ist, die so ausgelegt sind, daß die Drehmomente erfaßt werden, die von der ersten und von der zweiten Antriebseinrichtung (34, 36) erzeugt werden.

3. Bandabwickler nach Anspruch 2, dadurch gekennzeichnet, daß die gesteuerte Schwingungssignalquelle einen spannungsgesteuerten Oszillator (124) umfaßt, der funktionell an einen Vergleicher (128) angekoppelt ist, welcher seinerseits funktionell an eine Bezugssignalquelle (130) und an einen Differenzverstärker (132) angekoppelt ist, der Signal empfängt, welche die Drehmomente darstellen, die von den Antriebseinrichtungen (34, 36) erzeugt werden.

4. Bandabwickler nach einem der vorstehenden Ansprüche, gekennzeichnet durch Vergleichermittel (134, 136), die so ausgelegt sind, daß sie die Differenz zwischen den Geschwindigkeiten der Bandtransportrollen (26, 30) erfassen und die zweite Servoregelschleife (36, 60, 114, 118, 120) an die unabhängige Quelle (108, 110) ankoppeln, wenn die genannte Differenz zwischen den Geschwindigkeiten einen vorbestimmten Wert überschreitet.

5. Bandabwickler nach einem der vorstehenden Ansprüche, enthaltend:

— zwei Rollen (24, 32), die jeweils in der Nähe der einen entsprechenden Bandtransportrolle (26, 30) angeordnet sind und so ausgelegt sind, daß sie das teilweise Herumlegen des Bandes (22) um die entsprechende Bandtransportrolle (26, 30) herum über das entsprechende Ende der genannten Bahn hinaus gewährleisten, dadurch gekennzeichnet, daß jede dieser Rollen (24, 32) so gelagert ist, daß sie sich auf einem kreisbogenförmigen Weg um die zugehörige Bandtransportrolle (26, 30) bewegen kann und in eine solche Richtung beaufschlagt wird, daß sie bestrebt ist, den Umschlingungswinkel des Bandes (22) um diese Bandtransportrolle zu vergrößern.

6. Bandwickler nach Anspruch 5, dadurch gekennzeichnet, daß die beiden Rollen (24, 32) verwendet werden, um die Bandzufuhr und die Wiederaufnahmespannung dieses Band zu steuern.

7. Bandabwickler nach einem der vorstehenden Ansprüche, enthaltend:

— zwei Rollen (24, 32), die jeweils in der Nähe einer entsprechenden Bandtransportrolle (26, 30) angeordnet und so ausgelegt sind, daß sie die teilweise Umschlingung des Bandes (22) um die entsprechende Bandtransportrolle (26, 30) über das entsprechende Ende der genannten Bahn hinaus gewährleisten, dadurch gekennzeichnet, daß die Rollen (24, 32) selektiv in Richtungen bewegbar sind, die denjenigen entgegengesetzt sind, in die sie normalerweise beaufschlagt sind, um den Umschlingungswinkel des Bandes (22) zu vermindern und das Einlegen dieses Bandes in den Abwickler zu erleichtern.

**Claims**

1. A tape transport for use with transducer means to transport tape along a predetermined path extending past said transducer means, comprising:
two capstans (26, 30), each disposed at a respective end or said predetermined path;
two drive means (34, 36) each coupled to a respective one of said capstans (26, 30); control means (20) coupled to said drive means (34, 36) and arranged to control operation thereof to drive said capstans (26, 30) at differing torques whereby to induce a controlled tension in tape extending along said path;
said control means (20) comprising a first servo-control loop known per se including one of said drive means (34) and responsively coupled to an independent source of oscillatory signals (108, 110) to control the operation of said one drive means in accordance with the frequency thereof, and said control means (20) comprising a second servo-control loop including the other of said drive means (36) and responsively coupled to a controlled source of oscillatory signals (122, 124) to control the operation of said other drive means (36) in accordance with the frequency thereof, characterized in that the controlled source of oscillatory signals (122, 124) is responsively coupled to said first servo-control loop to generate its oscillatory signals in dependence upon the current supplied to said one drive means (34).

2. A tape transport according to claim 1, characterized in that said controlled source of oscillatory signals (122, 124) is responsively coupled to means (128, 130, 132) arranged to sense the torques developed by said one and said other drive means (34, 36).

3. A tape transport according to claim 2 characterized in that said controlled source of oscillatory signals comprises a voltage controlled oscillator (124) responsively coupled to a comparator (128) which is responsively coupled to a reference signal source (130) and to a differential amplifier (132) receiving signals representative of the torques developed by said drive means (34, 36).

4. A tape transport according to any preceding claim, characterized by comparison means (134, 136) arranged to sense the difference in the speeds of said capstans (26, 30) and to couple said second servo-control loop (36, 60, 114, 118, 120) so said independent source (108, 110) if said speed difference exceeds a predetermined level.

5. A tape transport according to any preceding claim, comprising:

— two rollers (24, 33), each disposed adjacent a respective one of said capstans (26, 30) and arranged to guide tape (22) beyond the respective end of said path in partial wrapping engagement about its respective capstan (26, 30), characterized in that each of said rollers (24, 32) is mounted for movement along an arcuate path about its respective capstan (26, 30) and is urged in a direction tending to increase the extent of said wrapping engagement of said tape (22).

6. A tape transport according to claim 5, characterized in that said rollers (24, 32) are used to control tape supply and take-up tension.

7. A tape transport according to any preceding claim, comprising:

— two rollers (24, 32), each disposed adjacent a respective one of said capstans (26, 30) and arranged to guide tape (22) beyond the respective end of said path in partial wrapping engagement about its respective capstan (26, 30), characterized in that said rollers (24, 32) are selectively movable in directions opposite to those in which they are normally urged, whereby to decrease said wrapping engagement of said tape (22) and facilitate threading of tape in said transport.

0 031 754

# Fig.1

CIRCUITS ENREGISTREMENT/ REPRODUCTION 76

CIRCUIT DE SERVO_COMMANDE 20

# Fig.2

EN PROVENANCE DE 34

VERS 20

# Fig.3

Fig.4